# EUROPÄISCHE PATENTANMELDUNG

(11) **EP 1 722 554 A2**
(43) Veröffentlichungstag der Anmeldung: **15.11.2006**
(21) Anmeldenummer: 06113050.6
(22) Anmeldetag: 25.04.2006
(51) Int. Cl.: H04N 5/335, H04N 5/225, F16C 11/06

(54) **Bildsensoraufnahmesystem und Verfahren zur Herstellung**

(30) Priorität: 13.05.2005 DE 102005022406
(71) Anmelder: ROBERT BOSCH GMBH, 70442 Stuttgart (DE)
(72) Erfinder: Drotleff, Hans-Georg, 71229, Leonberg (DE); Schick, Jens, 71083, Herrenberg (DE)

(57) **Zusammenfassung**

Die Erfindung betrifft ein Bildsensoraufnahmesystem 1 mit einem von einem ersten Haltemittel 3 getragenen Linsenhalter 2 und einem von einem zweiten Haltemittel 3 getragenen Bildsensor 6. Die Haltemittel 3,5 sind durch Abstandhalter 4.1,4.2,4.3 miteinander verbunden. Weiterhin betrifft die Erfindung ein Verfahren für die Herstellung eines Bildsensoraufnahmesystems 1.

## Beschreibung

### Stand der Technik

Die Erfindung betrifft ein Bildsensoraufnahmesystem nach dem Oberbegriff des Anspruchs 1. Weiterhin betrifft die Erfmdung ein Verfahren für die Herstellung eines Bildsensoraufnahmesystems nach dem Oberbegriff des Anspruchs 13. Ein Bildsensoraufnahmesystem der gattungsgemäßen Art besteht aus einem Bildsensor und ein mit diesem Bildsensor in optischer Wirkverbindung stehenden Optik. Die Optik bildet eine von dem Bildsensoraufnahmesystem aufzunehmende Szene auf den Bildsensor ab, der ein dem Bild entsprechendes elektrisches Ausgangssignal erzeugt. Bei der optischen Justage des Bildsensors in Bezug auf die Optik muss ein Optimum über 6 Freiheitsgrade eingestellt werden. Mit den Freiheitsgraden x, y und ϕ werden der zweidimensionale Versatz und die Verdrehung der Ebene des Bildsensors in Bezug auf die Optikebene beschrieben. Mit den Freiheitsgraden z, Tn und Tm werden der zu der Ebene des Bildsensors orthogonale Versatz und die beiden Taumelrichtungen in Bezug auf die z-Achse beschrieben. Diese Justage muss einerseits sehr genau sein, um eine optimale Abbildungsqualität zu erreichen. Vorzugsweise ist eine solche Justagemöglichkeit vorzusehen, um Toleranzen in der Fertigungskette auszugleichen. Andererseits sollen die Kosten für ein in Großserienfertigung herzustellendes Bildsensoraufnahmesystem möglichst gering sein. Vorzugsweise ist ein derartiges Bildsensoraufnahmesystem für Anwendungen im Kraftfahrzeug vorgesehen.

Aus DE 201 09 113 U1 ist eine Kugelverbindung bekannt, die aus einem Gehäuse und einem Bauteil besteht, welches ein kugelförmiges Ende besitzt, das in eine kalottenförmige Aussparung des Gehäuses passt. Die zur Arretierung der Gelenkverbindung notwendige Kraft wird durch die Spreizwirkung einer gewölbten Scheibe innerhalb des Bauteils aufgebracht. Die Spreizwirkung der Scheibe wird durch ein Betätigungselement, zum Beispiel eine Schraube, hervorgerufen, indem eine axiale Kraft auf die Scheibe ausgeübt wird. Die Scheibe erfährt durch das Einleiten einer axialen Kraft eine Änderung des Außendurchmessers. Nach dem Anliegen des Durchmessers an der Bohrungswand erfolgt die Durchmesseränderung mit einer hohen Verstärkung der axial aufzubringenden Kraft durch Ausnutzung des so genannten Kniehebeleffektes.

### Vorteile der Erfindung

Die Erfindung offenbart ein einfach und daher preiswert herzustellendes Bildsensoraufnahmesystem. Bildsensor und Optik können im Wesentlichen in einem einzigen Montageschritt optimal aufeinander justiert und in dieser Justierlage fixiert werden. Dabei ist keine Verklebung oder Verschraubung erforderlich. Vorteilhaft werden bei dem Bildsensoraufnahmesystem ein erstes, einen Linsenhalter tragendes Haltemittel und ein zweites, den Bildsensor tragendes Haltemittel, durch Abstandhalter miteinander verbunden, wobei die Abstandhalter durch ein Kugelgelenk mit wenigstens einem der Haltemittel verbunden sind. Vorteilhaft ist ein Endstück des Abstandhalters kugelförmig ausgebildet und in einer mit einem Haltemittel verbundenen Kugelhülse gelagert ist. Vorteilhaft ist das kugelförmig ausgebildete Endstück exzentrisch ausgebildet ist, wodurch eine leichte Justiermöglichkeit in einer Ebene gegeben ist. Weitere Vorteile ergeben sich aus der Beschreibung und weiteren Unteransprüchen.

### Zeichnung

Ausführungsbeispiele der Erfmdung werden im Folgenden unter Bezug auf die Zeichnung beschrieben. Dabei zeigt
- Figur 1: die schematische Darstellung eines Bildsensoraufnahmesystems;
- Figur 2: ein Endstück eines Abstandshalter;
- Figur 3: eine erste Seitenansicht eines Abstandshalters;
- Figur 4: eine zweite Seitenansicht eines Abstandshalters;
- Figur 5: eine Stirnansicht eines Abstandshalters;
- Figur 6: die Darstellung eines ersten Verfahrensschritts bei der Montage des Bildsensoraufnahmesystems;
- Figur 7: eine an einem Haltemittel befestigte Kugelhülse;
- Figur 8: die Darstellung eines weiteren Verfahrensschritts bei der Montage des Bildsensoraufnahmesystems;
- Figur 9: einen Verfahrensschritt bei der Verstemmung eines Linsenhalters mit einem Haltemittel;
- Figur 10: eine aus zwei Ringscheiben gebildetes Lager für einen Abstandhalter;
- Figur 11: einen mit dem in Figur 10 dargestellten Lager verbundenen Abstandhalter.

### Beschreibung der Ausführungsbeispiele

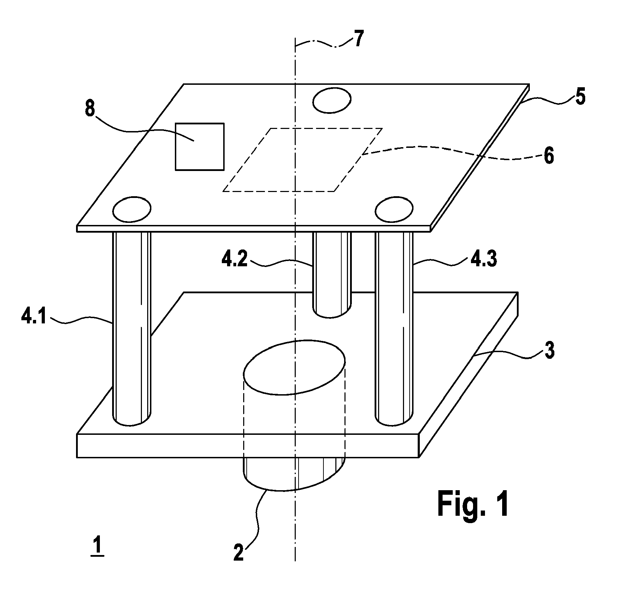

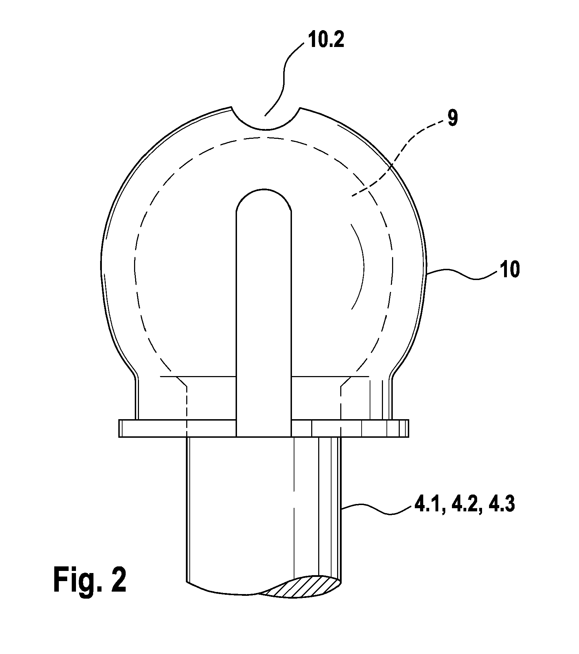

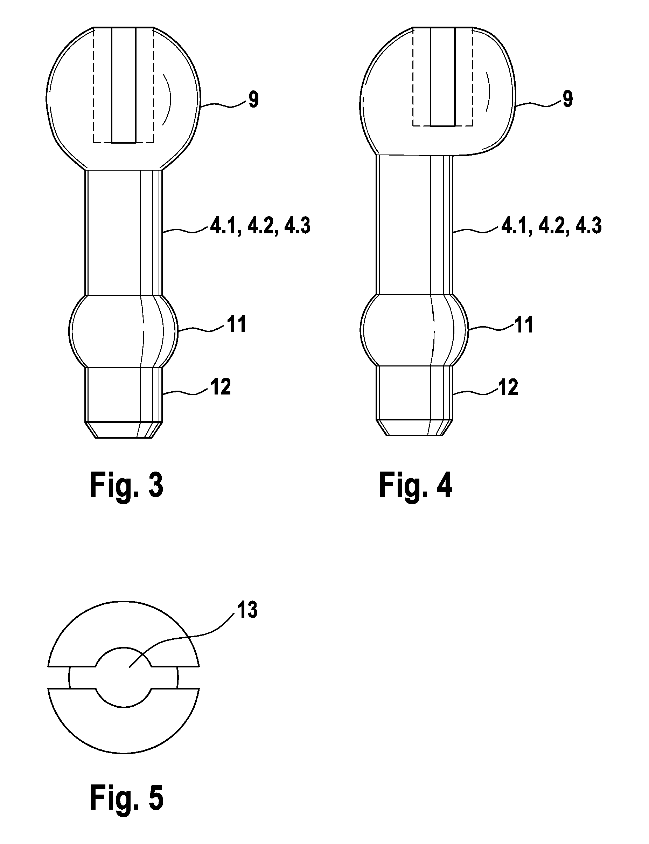

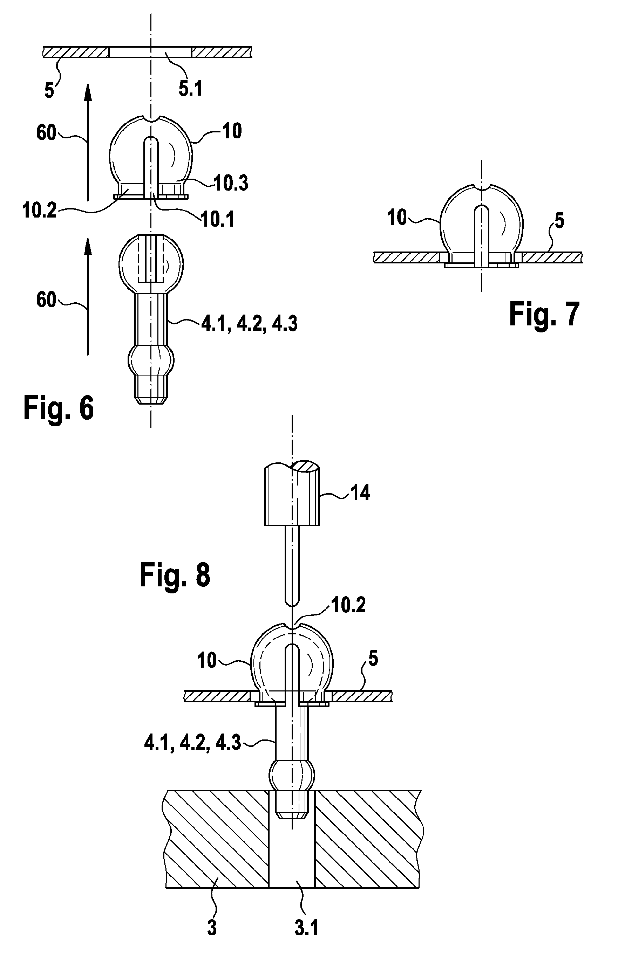

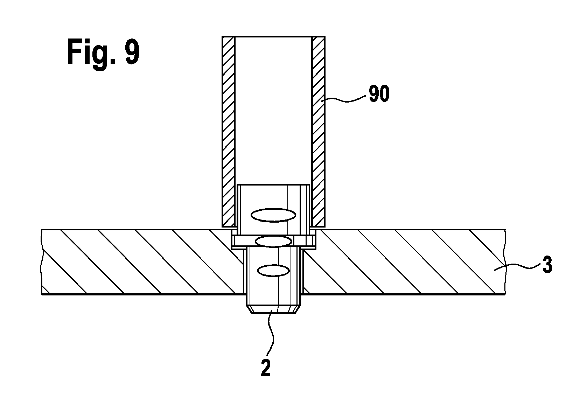

Figur 1 zeigt die schematische Darstellung eines Bildsensoraufnahmesystems 1. Dargestellt sind nur die wesentlichen optischen Elemente und deren Haltemittel. Aus Vereinfachungsgründen wurde auf die Darstellung von Gehäuseteilen verzichtet. Das Bildsensoraufnahmesystem 1 umfasst einen Linsenhalter 2 mit einem nicht näher dargestellten optischen System. Der Linsenhalter 2 ist in einem Haltemittel 3 angeordnet. Das Bildsensoraufnahmesystem 1 umfasst ein weiteres Haltemittel 5, das einen Bildsensor 6 trägt. Der Bildsensor 6 ist vorteilhaft in CCD oder CMOS-Technologie ausgeführt. Mit dem Haltemittel 3 sind Abstandshalter 4.1, 4.2, 4.3 verbunden, die ein zweites Haltemittel 5 tragen. Vorzugsweise sind drei Abstandshalter 4.1, 4.2, 4.3 vorgesehen. Das Haltemittel 5 trägt einen Bildsensor 6, der in der Fachwelt auch häufig als "Imager" bezeichnet wird. Bei dem Haltemittel 5 kann es sich vorzugsweise um eine Platine mit gedruckten Schaltkreisen handeln. Vorteilhaft werden beispielsweise auf dem Haltemittel 5 elektronische Schaltkreise 8 angeordnet, die für die Verarbeitung der von dem Bildsensor 6 gelieferten Ausgangssignale dienen. Die Abstandshalter 4.1, 4.2, 4.3 sorgen für eine optimale optische Justierung des von dem Linsenhalter 2 gehalterten optischen Systems und des Bildsensors 6. Dazu sind die Haltemittel 3,5 im Wesentlichen planparallel zueinander ausgerichtet und die optische Achse 7 des Bildsensoraufnahmesystems durchstößt den Linsenhalter 2 und den Bildsensor 6 in deren Zentrum. In der vorliegenden Erfindung werden diese Justierung und deren dauerhafte Sicherung ganzheitlich in dem Sinne gelöst, dass die gesamte Toleranzkette aller beteiligten Bauelemente und Haltemittel berücksichtigt wird. Diese Vorgehensweise wird im Folgenden beschrieben. Die zu berücksichtigenden Freiheitsgrade werden in zwei Gruppen eingeteilt. Eine erste zweidimensionale Gruppe umfasst die Translation in x- und y- Richtung einer Bezugsebene und eine Rotation um die optische Achse 7, die durch den Winkel ϕ charakterisiert ist. Die optische Achse 7 steht senkrecht auf dieser Bezugsebene. Eine zweite dreidimensionale Gruppe von Freiheitsgraden umfasst die Verschiebung in Richtung der z-Achse und die Taumelrichtungen Tn und Tm um die z-Achse. Unvermeidliche Toleranzen, die bei der Befestigung des Bildsensors (beispielsweise durch Löten) auf dem Haltemittel 5 und durch die Herstellung des Haltemittels 5 selbst bedingt sind, können vorteilhaft dadurch auf elektronischem Weg ausgeglichen werden, dass bewusst auf die Auswertung von Pixelreihen in den Randbereichen des Bildsensors 5 verzichtet wird. In Abhängigkeit von den bei Serienherstellung erreichbaren Toleranzwerten kann es zweckmäßig sein, etwa 10 bis 20 Pixelreihen in den Randbereichen des Bildsensors 5 nicht zu berücksichtigen. Zu große Toleranzwerte im Winkelbereich, dass heißt bezüglich des Winkels ϕ, können auf diese Weise jedoch nicht ausgeglichen werden und werden zweckmäßig aussortiert. Die Justierung und Fixierung der Justierlage innerhalb der zweiten Toleranzgruppe, also in Richtung der z-Achse und in Richtung der Taumelachsen Tn, Tm, werden mit Hilfe der Abstandshalter 4.1, 4.2, 4.3 und einem Verstemmverfahren in einem Prozessschritt durchgeführt. Für das Verstemmverfahren wird eine Verstemmeinrichtung eingesetzt, die eine der Anzahl der eingesetzten Abstandshalter 4.1, 4.2, 4.3 entsprechende Anzahl von Stellgliedern aufweist. Für das in Figur 1 dargestellte Ausführungsbeispiel würde demzufolge eine Verstemmeinrichtung mit drei Stellgliedern eingesetzt. Der Vorschub der Stellglieder wird durch in Echtzeit ermittelte optische Parameter der optischen Komponenten des Bildsensoraufnahmesystems geregelt. Durch gleichzeitiges Einpressen aller Abstandshalter 4.1, 4.2, 4.3 in das den Linsenhalter 2 tragende Haltemittel 3 kann eine Justierung bezüglich der z-Achse durchgeführt werden. Durch unterschiedliches Einpressen der Abstandshalter 4.1, 4.2, 4.3 kann eine Justierung in Bezug auf die Taumelachsen Tn und TM vorgenommen werden. Eine besonders vorteilhafte Ausgestaltung eines Abstandshalters 4.1, 4.2, 4.3s wird im Folgenden unter Bezug auf Figur 2 und Figur 3 beschrieben. Figur 2 zeigt, in vergrößerter Darstellung, ein Endstück 9 eines Abstandshalters 4.1, 4.2, 4.3s. Wie im Folgenden noch weiter erläutert wird, wirkt das Endstück 9 mit einer Kugelhülse 10 zusammen, die das Endstück 9 umschließt. Figur 3 zeigt eine erste Seitenansicht des Abstandshalters 4.1, 4.2, 4.3s. Der Abstandshalter 4.1, 4.2, 4.3 ist im Wesentlichen zylindrisch ausgebildet. Ein Endstück 9 des Abstandshalter 4.1, 4.2, 4.3s ist, wie bereits schon erwähnt, im Wesentlichen kugelförmig ausgebildet. Das zweite Endstück des Abstandshalter 4.1, 4.2, 4.3s trägt eine ballige Verdickung, die mit Abstand von dem Ende des Abstandshalter 4.1, 4.2, 4.3s angeordnet ist. Das Endstück geht dann wieder in einen zylinderförmigen Abschnitt des Endstücks 12 über. Figur 2 zeigt eine in Bezug auf die Darstellung in Figur 3 um 90° verdrehte Seitenansicht des Abstandshalters 4.1, 4.2, 4.3s. Figur 5 zeigt eine Sicht auf eine Stirnfläche des Abstandshalter 4.1, 4.2, 4.3s in dem Bereich des Endstücks 9. Erkennbar ist eine schlitzförmige Ausnehmung 13, die als Aufnahme für ein Verstemmwerkzeug der Verstemmeinrichtung dient. Die Montage des Bildsensoraufnahmesystems 1 wird im Folgenden unter Bezug auf Figur 6, Figur 7 und Figur 8 erläutert. Diese Figuren verdeutlichen verschiedene Verfahrensschritte bei der Montage. Die Verbindung der Abstandshalter 4.1, 4.2, 4.3 mit dem den Bildsensor 6 tragenden Haltemittel 5 erfolgt mittels der Kugelhülse 10. Wie in Figur 6 dargestellt, wird die Kugelhülse 10 durch Krafteinwirkung in Richtung des Pfeils 60 in eine in dem Haltemittel 5 angeordnete Ausnehmung eingepresst bis sie die in Figur 7 dargestellte Lage einnimmt. Ein axialer Schlitz 10.1 trennt die Kugelhülse 10 in zwei federnde Schenkel. Der Schlitz 10.1 erleichtert einerseits das Einpressen der Kugelhülse 10 in das Haltemittel. Andererseits sichern die federnden Schenkel 10.2, 10.3 eine feste Lage der Kugelhülse 10. Nach dem Einpressen der Kugelhülse 10 in die Ausnehmung 5.1 des Haltemittels 5 wird in einem nächsten Schritt der Abstandshalter 4.1, 4.2, 4.3 in die Kugelhülse eingepresst. Das von der Kugelhülse 10 und von dem kugelförmigen Endstück des Abstandshalter 4.1, 4.2, 4.3s gebildete Kugelgelenk erlaubt eine Taumelbewegung des den Bildsensors 6 tragenden Haltemittels 5. In einem nächsten Verfahrensschritt werden die schon mit dem Haltemittel 5 verbundenen Abstandshalter 4.1, 4.2, 4.3 in Ausnehmungen 3.1 des Haltemittels 3 eingesetzt, bis die balligen Verdickungen 11 auf dem Haltemittel 3 aufliegen. In einem letzten Schritt wird das Verstemmwerkzeug 14 der Verstemmeinrichtung durch die Ausnehmung 10.2 der Kugelhülse 10 hindurch in die Ausnehmung 13 des Abstandhalters eingeführt. In der Zeichnung nicht dargestellte Stellglieder der Verstemmeinrichtung beaufschlagen nun die Werkzeuge 14 der Verstemmeinrichtung mit einer in Axialrichtung wirkenden Kraft, wodurch die Abstandshalter 4.1, 4.2, 4.3 in das Haltemittel 3 eingepresst werden. Dieser Pressvorgang wird dabei in Echtzeit durch die Erfassung optischer Parameter des Bildsensoraufnahmesystems gesteuert. Bevorzugt sind dabei die Stelleinrichtungen der Verstemmeinrichtung selektiv steuerbar, so dass die Abstandshalter 4.1, 4.2, 4.3 im Bedarfsfall unterschiedlich tief in das Haltemittel 3 einpressbar sind. Wie in Figur 4 dargestellt, ist der Abstandshalter 4.1, 4.2, 4.3 bevorzugt exzentrisch ausgebildet. Das heißt, dass das kugelförmige Endstück 9 des Abstandhalters exzentrisch an den im Wesentlichen zylindrisch ausgebildeten Körper des Abstandshalter 4.1, 4.2, 4.3s angeformt ist. Diese Ausgestaltung der Abstandshalter 4.1, 4.2, 4.3 ermöglicht eine Justierung in Bezug auf die x- und y-Achsen und in Bezug auf den Winkel ϕ vor dem beschriebenen Einpressvorgang. Wie in Figur 9 dargestellt, wird auch der Linsenhalter 2 bevorzugt durch Einsatz einer Verstemmeinrichtung 90 mit dem Haltemittel 3 verstemmt. Bei diesem Haltemittel 3 kann es sich auch um ein Teil des Gehäuses des Bildsensoraufnahmesystems 1 handeln.

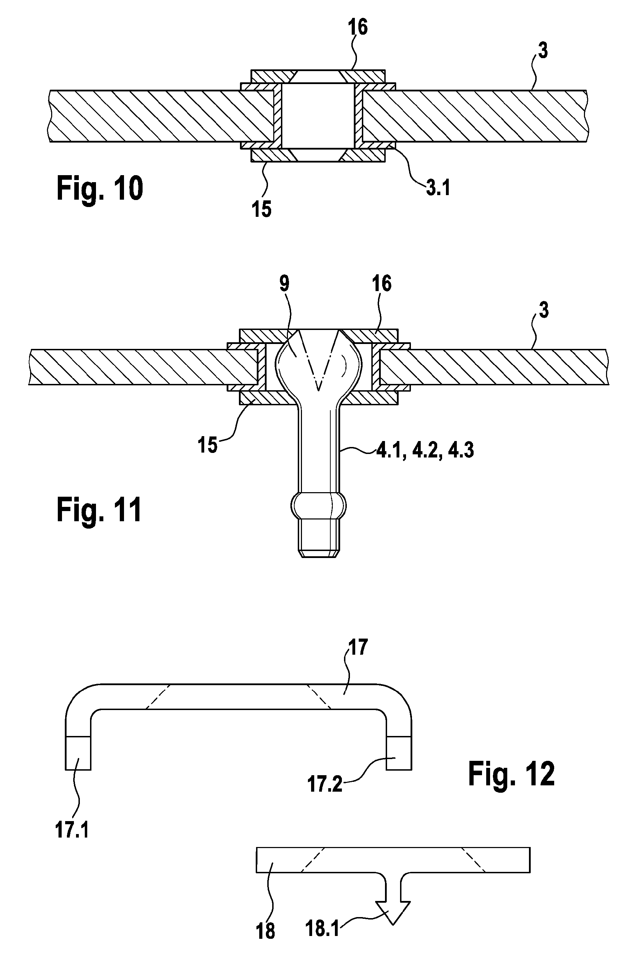

Bei einer vorteilhaften weiteren Ausgestaltung der Erfindung (Fig.10, Fig. 11) wird anstelle einer komplex geformten Kugelhülse eine aus zwei Lochscheiben 15, 16 gebildete Lagerung für das kugelförmig ausgestaltete Endstück 9 des Abstandshalter 4.1, 4.2, 4.3s vorgesehen. Um einen Formschluss zu wenigstens einem Teil des Endstücks 9 zu ermöglichen, werden die Lochscheiben 15, 16 vorteilhaft angefast. Figur 10 zeigt ein Haltemittel 3, bei dem es beispielsweise um eine als Multilayer ausgebildete Platine handeln kann. Das Haltemittel 3 weist eine Ausnehmung 3.1, bei der es sich beispielsweise um eine durchkontaktierte Bohrung handeln kann. Konzentrisch zu der Ausnehmung 3.1 sind auf beiden Seiten des Haltemittels 3 Lochscheiben 15, 16 aufgelötet. Figur 11 verdeutlicht die Situation nach Einführung des Abstandhalters. Das kugelförmige Endstück 9 des Abstandhalters wurde von unten durch die Lochscheibe 15 eingeführt und durch die Lochscheibe 16 hindurch mit einem meißelartigen Werkzeug auseinander getrieben bzw. verformt. In einem weiteren vorteilhaften Ausführungsbeispiel der Erfindung sind Lochscheiben 17, 18 vorgesehen (Figur 12), die nicht mit dem Haltemittel 3 verlötet, sondern durch eine Steckverbindung mit dem Haltemittel 3 verbunden sind. Die Lochscheiben 17, 18 verfügen dazu über aus der Ebene der Lochscheibe 17, 18 abgebogene Widerhaken, 17.1,18.1, 18.2, die in entsprechende Bohrungen in dem Haltemittel 3 eingesteckt werden und dort verrasten. Vorteilhaft sind die Widerhaken tannenzapfenförmig ausgebildet. Vorteilhaft sind die identisch ausgebildeten Lochscheiben 17,18 um 90° zueinander versetzt angeordnet.

## Patentansprüche

1. Bildsensoraufnahmesystem (1) mit einem von einem ersten Haltemittel (3) getragenen Linsenhalter (2) und einem von einem zweiten Haltemittel (5) getragenen Bildsensor (6), **dadurch gekennzeichnet, dass** die Haltemittel (3,5) durch Abstandhalter (4.1, 4.2, 4.3) miteinander verbunden sind.

2. Bildsensoraufnahmesystem (1) nach Anspruch 1, **dadurch gekennzeichnet, dass** die Abstandhalter (4.1, 4.2, 4.3) durch ein Kugelgelenk mit wenigstens einem Haltemittel (3,5) verbunden sind.

3. Bildsensoraufnahmesystem (1) nach einem der vorhergehenden Ansprüche, **dadurch gekennzeichnet, dass** ein Endstück des Abstandhalters (4.1, 4.2, 4.3) kugelförmig ausgebildet ist.

4. Bildsensoraufnahmesystem (1) nach einem der vorhergehenden Ansprüche, **dadurch gekennzeichnet, dass** das Endstück in einer mit einem Haltemittel (3,5) verbundenen Kugelhülse gelagert ist.

5. Bildsensoraufnahmesystem (1) nach einem der vorhergehenden Ansprüche, **dadurch gekennzeichnet, dass** das kugelförmig ausgebildete Endstück exzentrisch ausgebildet ist.

6. Bildsensoraufnahmesystem (1) nach einem der vorhergehenden Ansprüche, **dadurch gekennzeichnet, dass** der Abstandhalter (4.1, 4.2, 4.3) in dem Bereich seines dem kugelförmig ausgebildeten Endstück abgewandten Endstücks eine ballig ausgebildete Verdickung trägt.

7. Bildsensoraufnahmesystem (1) nach einem der vorhergehenden Ansprüche, **dadurch gekennzeichnet, dass** die Kugelhülse mit einem in Axialrichtung gerichteten Schlitz (10.1) versehen ist.

8. Bildsensoraufnahmesystem (1) nach einem der vorhergehenden Ansprüche, **dadurch gekennzeichnet, dass** die Haltemittel (3,5) durch mindestens drei Abstandhalter (4.1, 4.2, 4.3) miteinander verbunden sind.

9. Bildsensoraufnahmesystem (1) nach einem der vorhergehenden Ansprüche, **dadurch gekennzeichnet, dass** ein Endstück des Abstandshalters (4.1, 4.2, 4.3) in einer von Lochscheiben (15, 16, 17,18) begrenzten Ausnehmung (3.1) angeordnet ist.

10. Bildsensoraufnahmesystem (1) nach einem der vorhergehenden Ansprüche, **dadurch gekennzeichnet, dass** die Lochscheiben (15,16) mit dem Haltemittel (3) verlötet ist.

11. Bildsensoraufnahmesystem (1) nach einem der vorhergehenden Ansprüche, **dadurch gekennzeichnet, dass** die Lochscheiben (18,19) mit Widerhaken (17.1, 18.1, 18.2) versehen ist.

12. Bildsensoraufnahmesystem (1) nach einem der vorhergehenden Ansprüche, **dadurch gekennzeichnet, dass** der Linsenhalter (2) mit dem Haltemittel (3) verstemmt ist.

13. Verfahren für die Herstellung eines Bildsensoraufnahmesystems (1) nach einem der vorhergehenden Ansprüche, **dadurch gekennzeichnet, dass** Abstandshalter (4.1, 4.2, 4.3) mittels eines Kugelgelenks mit einem den Bildsensor tragenden Haltemittel (5) verbunden werden, dass die freien Enden der Abstandshalter 4.1, 4.2, 4.3 in Ausnehmungen eines einen Linsenhalter (2) tragenden Haltemittels (3)eingesetzt werden, dass die Abstandshalter (4.1, 4.2, 4.3), gesteuert durch in Echtzeit ermittelte optische Parameter des Bildsensoraufnahmesystems (1) individuell verpresst werden.
